# EUROPÄISCHE PATENTANMELDUNG

(11) **EP 2 730 550 A2**
(43) Veröffentlichungstag der Anmeldung: **14.05.2014**
(21) Anmeldenummer: 13005181.6
(22) Anmeldetag: 02.11.2013
(51) Int. Cl.: C04B 24/26, C04B 28/14, C04B 40/00

(54) **Abbindeverzögerer-Zusammensetzung für Gips-Zementmischungen**

(30) Priorität: 09.11.2012 DE 102012021910
(71) Anmelder: BK Giulini GmbH, 67065 Ludwigshafen/Rhein (DE)
(72) Erfinder: Lösch, Sabine, 69502 Hemsbach (DE); Staffel, Thomas, 67269 Grünstadt (DE)
(74) Vertreter: Wagner, Jutta

(57) **Zusammenfassung**

Die vorliegende Erfindung betrifft eine Abbindeverzögerer-Zusammensetzung, wobei erfindungsgemäß mindestens ein Natriumsalz von Polyacrylsäure und vorzugsweise zumindest eine Kieselsäure enthalten ist. Die Erfindung betrifft außerdem ein Verfahren zur Einstellung der Abbindezeit von Gips-Zementmischungen, bei welchem man der Mischung eine Abbindeverzögerer-Zusammensetzung in einer Menge von 0,05 bis 0,8 Gew.-% zufügt.

## Beschreibung

Die vorliegende Erfindung betrifft eine Abbindeverzögererzusammensetzung für Gips-Zementmischungen, welche insbesondere für die Herstellung von Fertigelementen im Fertighausbau verwendet werden können.

Gips-Zementmischungen sind z.B. in DE 10 2010 048339 A1 beschrieben. Dort wird ein System für die Herstellung von Fertigelementen für Gebäude vorgestellt, bei dem eine wässrige Gips-Zementmischung verwendet wird. Die zum Einsatz kommende Gips-Zementmischung umfasst Calciumsulfat-Hemihydrat und hydraulischen Zement im Gewichtsverhältnis 4:1 bis 2,5:1. Neben üblichen Zuschlagstoffen und einem Fließmittel mit Luftporenbildner können auch Abbindeverzögerer und andere Zusatzmittel enthalten sein. Als Abbindeverzögerer werden Copolymere und Polymere der Acrylsäure, Polyasparaginsäure, Polysuccinimid, Gluconate, Weinsäure und diverse Phosphatsalze, z.B. Alkaliphosphate, genannt, wobei Zitronensäure besonders bevorzugt ist, siehe Absatz [0032].

Die Verlängerung der Abbindezeit, bzw. eine ausreichend lange Abbindezeit, ist erforderlich, damit die Ausspritzung der Fertigelemente zu Ende geführt werden kann, ohne dass die Gips-Zementmischung abbindet. Denn es sind oft noch Korrekturen in der Dicke und Homogenität der Platten bzw. Elemente erforderlich. Die offene Zeit muss dafür im Bereich von 4 und 8 Stunden liegen.

Die gemäß DE 10 2010 048339 A1 als Abbindeverzögerer verwendete Zitronensäure bewirkt keine optimale Verzögerung der Abbindezeit. Sie ist nicht ausreichend, um Fertigelemente homogen ausspritzen zu können, bevor die Abbindung einsetzt.

Die Verzögerung der Abbindung von Gips und Zement ist im Stand der Technik auch bereits zuvor ausführlich beschrieben worden.

Die EP 0 011 581 A1 schlägt Polymere und Copolymere der Acrylsäure, der Methacrylsäure und des Acrylamids mit einem Molekulargewicht unter 1000 zur Verzögerung der Abbindung von Gips vor.

In der DE 23225738 wurde vorgeschlagen, die offene Zeit bei der Gipsverarbeitung durch Zugabe wasserlöslicher Polymere auf Basis von ungesättigten Dicarbonsäuren zu verlängern.

In der EP 0 681 999 B1 wird ein Spritzzement auf Portlandzementbasis, welcher auch einen Anteil an Putzgips enthält, beschrieben. Diese Mischung wird als sprühbare Feuerfest-Zusammensetzung eingesetzt. Als Abbindeverzögerer, die vor allem für die Abbindung des zugesetzten Putzgipses dienen sollen, werden proteinhaltige Verzögerer empfohlen.

In der DE 39 37 432 A1 werden ebenfalls Gips-Zementmischungen beschrieben, wobei als Verzögerer Hydroxycarbonsäuren, Aminosäuren und Eiweißhydrolysate, sowie tierischer Leim genannt werden.

In der EP 1 270 540 A1 wird ein Verfahren zur Verzögerung der Abbindung von Gips offenbart, bei dem man als Verzögerungsmittel Copolymere der Acrylsäure mit Dipropylenglycoldiacrylat (DPGDA), Tripropylenglycoldiacrylat (TPGDA), Acrylamidomethylpropansulfonsäure (AMPS) und/oder Acrylsäureester einsetzt. Das Molekulargewicht der Copolymeren soll sich zwischen 2000 und 20.000 bewegen.

Die bisher verwendeten Systeme erlauben es nicht, die bei der Fertigelementeherstellung geforderte Abbindezeit von mindestens 4 Stunden, vorzugsweise bis zu 8 Stunden sicher zu erreichen. Es besteht daher die Aufgabe, verbesserte Abbindeverzögerer für Gips-Zementmischungen bereitzustellen.

Überraschenderweise wurde nun gefunden, dass eine Abbindeverzögerer-Zusammensetzung aus dem Natriumsalz einer Polyacrylsäure (im folgenden Natriumpolyacrylat), wobei das Natriumpolyacrylat ein Molekulargewicht im Bereich von 3.000 bis 10.000 hat, die Abbindezeit so deutlich verlängert, dass ein Ausspritzen der Elemente ohne Probleme zu Ende geführt werden kann.

Die Erfindung löst somit die oben genannte Aufgabe durch eine Abbindeverzögerer - Zusammensetzung, umfassend zumindest ein Natriumpolyacrylat mit einem Molekulargewicht im Bereich von 3.000 bis 10.000 . Weiterhin wird die die Aufgabe durch ein Verfahren zur Einstellung der Abbindezeit von Gips-Zementmischungen gelöst, bei welchem man der Mischung eine Abbindeverzögerer-Zusammensetzung, umfassend zumindest Natriumpolyacrylat, in einer Menge von 0,05 bis 0,5 Gew.-% zufügt.

Mit Gips-Zementmischung sind Bindemittel gemeint, welche Gips und Zement im Gewichtsverhältnis 4:1 bis 2,5:1 enthalten. Vorzugsweise umfasst die Gips-Zementmischung Gips und Zement im Gewichtsverhältnis von etwa 3:1. Als Gips ist vor allem Calciumsulfat-Hemihydrat brauchbar, wird ein kommerzielles Gemisch verwendet, sollten zumindest 50 % Calciumsulfat-Hemihydrat enthalten sein. Der Zement ist vorzugsweise gemahlener Portlandzementklinker.

Als Natriumpolyacrylat eignen sich Natriumsalze von Polymeren der Acrylsäure mit einem Molekulargewicht im Bereich von 3.000 bis 10.000 (Gewichtsmittel, bestimmt über die Brookefield-Viskosität). Mit Natrium neutralisierte Polyacrylsäure ist an sich bekannt und kommerziell erhältlich. Es handelt sich in der Regel um weiße, wasserlösliche Pulver. Häufig werden sie auch als wässrige Lösung angeboten. Ein besonders bevorzugtes Natriumpolyacrylat weist ein Molekulargewicht von Mw= 5000 bis 7000 auf und ist ein weißes, in Wasser lösliches Pulver. Seine ca. 10 %-ige wässrige Lösung weist einen schwach basischen pH-Wert zwischen 6,5 und 8,5 auf. In Vergleichsversuchen konnte festgestellt werden, dass dieses spezielle Polyacrylsäuresalz mit dem Molekulargewicht zwischen 5000 und 7000 die gewünschten langen Abbindezeiten besonders zuverlässig und reproduzierbar gewährleistet. Obwohl die polymeren Acrylsäuren bereits im Stand der Technik beschrieben worden sind, war es sehr überraschend, dass gerade diese Type so gut geeignet ist.

Vorzugsweise enthält die erfindungsgemäße Abbindeverzögerer-Zusammensetzung eine pyrogene Kieselsäure zum Schutz des Natriumpolyacrylat gegen Hydratation. Insbesondere handelt es sich um eine hydrophobe, pyrogene Kieselsäure. Die Kieselsäure verbessert die Fließfähigkeit von Natriumpolyacrylat Pulver und verringert dessen Neigung zum Verbacken, indem sie die pulverförmigen Natriumpolyacrylat Partikel umhüllt und die Kohäsionskräfte vermindert. Zudem kann sie durch ihre hohe Saugfähigkeit für Flüssigkeiten die in Pulvermischungen vorhandene Restfeuchte aufnehmen. Dies verhindert ein nachträgliches Verbacken der pulverförmigen Natriumpolyacrylat Partikel bei der Lagerung. Die pyrogene Kieselsäureist ist kommerziell verfügbar.

Eine bevorzugte Kieselsäure hat eine BET-Oberfläche im Bereich von 200 bis 350 m²/g, insbesondere 230 bis 310 m²/g. Die Schüttdichte beträgt vorzugsweise etwa 50 g/l, die durchschnittliche Partikelgröße von 5 bis 10 nm, insbesondere etwa 7 nm.

Die Komponenten der erfindungsgemäßen Abbindeverzögerer-Zusammensetzung werden üblicherweise als Pulver gemischt. Nötigenfalls erfolgt eine Mahlung der Mischung, um die bevorzugte mittlere Partikelgröße von 200 µm zu erreichen. Mengen von 0,1 bis 1,0 Gew.-%, vorzugsweise 0,3 bis 0,6 Gew.-%, Kieselsäure bezogen auf das Natriumpolyacrylat haben sich bewährt.

Die erfindungsgemäße Abbindeverzögerer-Zusammensetzung wird als Pulver(mischung) eingesetzt und kann entweder der Gips-Zementmischung beigefügt oder zusammen mit der Gesteinskörnung und evtl. Zusatzstoffen und/oder Zusatzmitteln beim Anmachen zugefügt werden.

Das erfindungsgemäße Verfahren erlaubt überraschenderweise durch die Zugabe von 0,05 bis 0,8 Gew.-%, insbesondere 0,1 bis 0,3 Gew.-%, der erfindungsgemäßen Abbindeverzögerer-Zusammensetzung eine Einstellung der Abbindezeit im Bereich von etwa 1 bis 9 Stunden. Hierbei ergibt sich auch bei den höheren Mengen, d.h. den längeren Abbindezeiten, ein sehr definiertes, schnelles Abbinden. Bei der im Stand der Technik vorgeschlagenen Zitronensäure wurde dagegen bei höheren Mengen ein eher kontinuierlich vom Ansteifen in Abbinden übergehendes Verhalten gefunden. Dadurch ist selbst bei hohen Mengen Zitronensäure die Fließfähigkeit der Gips-Zementmischung für eine exakte Ausfüllung von Ecken und engeren Bereichen der Form von Fertigteilen nicht sicher ausreichend. Diese Problematik überwindet die Erfindung.

Die Dosierung der erfindungsgemäßen Abbindeverzögerer-Zusammensetzung erfolgt als Pulver, entweder beim Anmachen oder bereits als Zusatz zu der Gips-Zementmischung. Damit können vorteilhaft Gips-Zementmischungen mit verschieden langen Abbindezeiten werksmäßig und nach Kundenanforderung bereitgestellt werden.

Der Gips-Zementmischung werden in der Regel beim Anmachen mit Wasser Gesteinskörnungen, insbesondere Sand, zugemischt, je nach Anwendung auch Zusatzstoffe wie Fasern, Schaumstoff und ähnliche. Neben der erfindungsgemäßen Abbindeverzögerer-Zusammensetzung können auch weitere Zusatzmittel eingesetzt werden, beispielsweise Luftporenbildner, Hydrophobierungsmittel, Fließmittel usw., normalerweise jedoch keine Abbindebeschleuniger.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Eine Gips-Zementmischung enthaltend CaSO₄ - Halbhydrat und Portlandzement CEM I im Gewichtsverhältnis 3 zu 1 wurde mit Natriumpolyacrylat mit einem Molekulargewicht von 5.000 bis 7.000 in Mengen von 0,1 bis 0,3 Gew.-% in trockenem Zustand gemischt. Die Gips-Zementmischung wurde analog zu den Beispielen der DE 10 2010 048339 A1 gewählt, aber ohne weitere Bestandteile bzw. Zusätze, um den Einfluss anderer Bestandteile oder Zusätze auszuschließen.

Die jeweiligen Mischungen wurden mit Wasser versetzt, bzw. aufgelöst, und gerührt bzw. homogenisiert. Die so entstandene mineralische Bindemittelmischung wurde dann in dem Gerät "Ultrasonic Tester BP 7" der Firma Ultratest GmbH, Bremen bei einer Temperatur von 20 °C und 65 % relativer Luftfeuchte in einer Klimakammer auf die Abbindezeit untersucht.

Die Ultraschallmethode ist in dem Artikel "Untersuchung des Abbindeverhaltens von Gips- Zementmischungen mit der Ultraschallmethode" von T. Staffel, G. Brix, in der Con. Chem. Journal, (1996), Heft 3, ausführlich beschrieben. Aufgenommen wird die Ultraschallgeschwindigkeit in Abhängigkeit von der Zeit. Bei noch weichem Ansatz ist die Ultraschallgeschwindigkeit klein, mit zunehmender Härte der Probe nimmt die Schallgeschwindigkeit zu. Es lassen sich so direkte Darstellungen des Härteverlaufes registrieren und vergleichen.

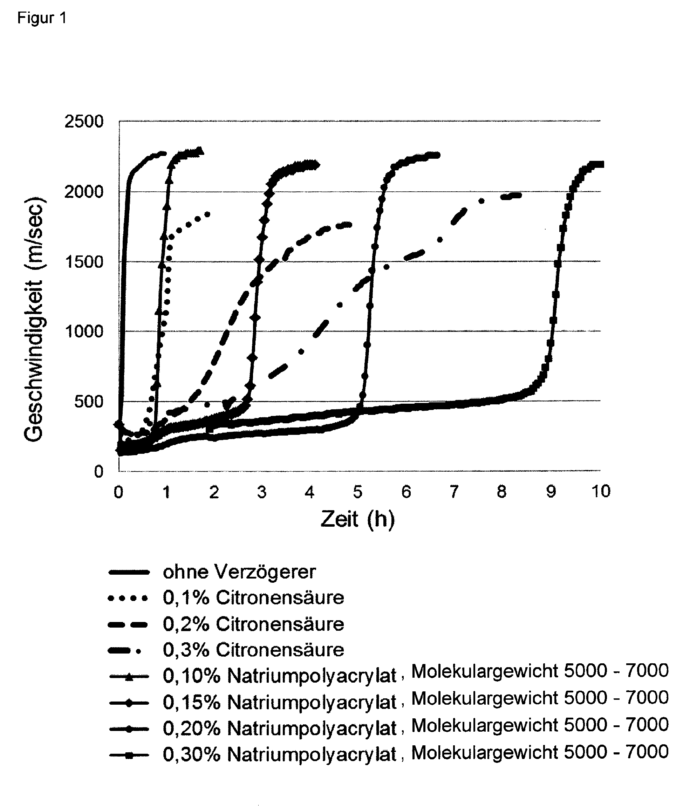

Die Ergebnisse sind in Figur 1 dargestellt. Man erkennt, dass über die Menge an Polyacrylat die Abbindezeit im Bereich von 1 Stunde bis zu 9 Stunden präzise eingestellt werden kann.

### Vergleichsbeispiel 2

Es wurden analog zu Beispiel 1 Vergleichsversuche mit 0,1, 0,2 und 0, 3 % Zitronensäure in unterschiedlichen Konzentrationen durchgeführt, deren Ergebnis auch in der Figur 1 wiedergegeben wird.

Bei gleicher Konzentration an Abbindeverzögerer von jeweils 0,1, 0,2 und 0,3 % kann man im Vergleich gut erkennen, dass die offene Zeit der Gips-Zementmischung bei einer Konzentration von 0,3 % Polyacrylat bezogen auf die eingesetzte Gips-Zementmischung am längsten war, nämlich ca. 9 Stunden. Die Zitronensäure in der gleichen Konzentration bindet bereits nach 3 bis 4 Stunden ab. Diese Kurve hat auch keinen erkennbaren Wendepunkt, so dass die Zeit eher als Bereich anzusehen ist.

### Vergleichsbeispiel 3

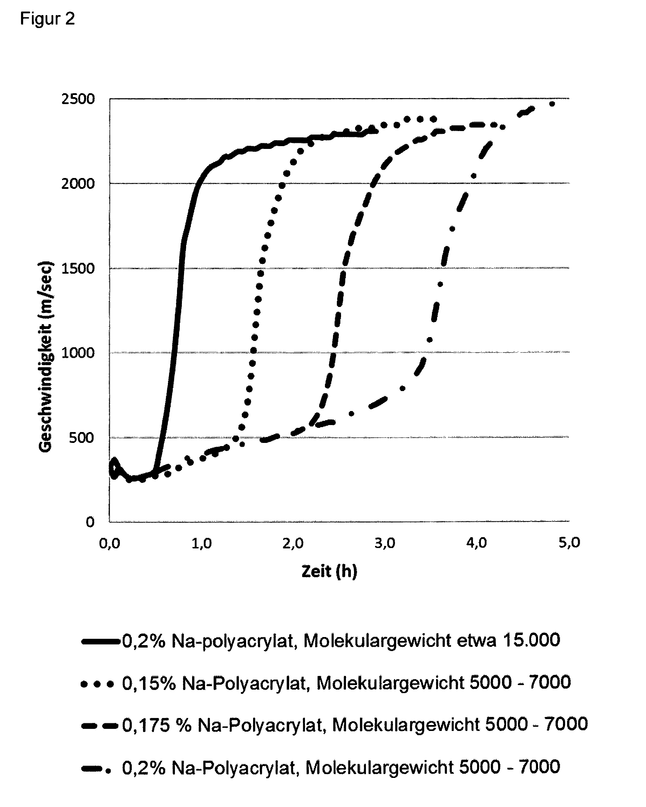

Analog zu Beispiel 1 wurden 0,15, 0,175 und 0,2 % Natriumpolyacrylat mit einem Molekulargewicht von 5.000 bis 7.000 mit einem Natriumpolyacrylat mit einem Molekulargewicht von etwa 15.000 verglichen. Das Ergebnis ist in der Figur 2 wiedergegeben. Die offene Zeit war bei dem Natriumpolyacrylat mit einem Molekulargewicht von 5.000 bis 7.000 für alle Konzentrationen wesentlich länger als bei dem Natriumpolyacrylat mit einem Molekulargewicht von etwa 15.000. Ein Natriumpolyacrylat mit einem Molekulargewicht von 3.000 bis 10.000, insbesondere von 5.000 bis 7.000, ist daher besonders bevorzugt.

## Patentansprüche

1. Abbindeverzögerer-Zusammensetzung für eine Gips-Zementmischung, enthaltend zumindest ein Natriumsalz von Polyacrylsäure mit einem ein Molekulargewicht im Bereich von 3.000 bis 10.000.

2. Abbindeverzögerer-Zusammensetzung gemäß Anspruch 1, **dadurch gekennzeichnet, dass** die Gips-Zementmischung Gips und Zement im Gewichtsverhältnis von 4:1 bis 2,5:1 enthält.

3. Abbindeverzögerer-Zusammensetzung gemäß Anspruch 1 oder 2, **dadurch gekennzeichnet, dass** das Natriumsalz von Polyacrylsäure ein Natriumpolyacrylat ein Molekulargewicht im Bereich von 5.000 bis 7.000 ist.

4. Abbindeverzögerer-Zusammensetzung gemäß Anspruch 1, 2 oder 3,
**dadurch gekennzeichnet, dass** eine Kieselsäure enthalten ist, vorzugsweise eine hydrophobe Kieselsäure mit einer BET-Oberfläche im Bereich von 200 bis 350 m²/g, insbesondere 230 bis 310 m²/g, und/oder einer Schüttdichte von etwa 50 g/l und/oder einer durchschnittlichen Partikelgröße von 5 bis 10 nm, bevorzugt etwa 7 nm.

5. Abbindeverzögerer-Zusammensetzung gemäß Anspruch 4, **dadurch gekennzeichnet, dass** von 0,1 bis 1,0 Gew.-%, vorzugsweise 0,3 bis 0,6 Gew.-%, Kieselsäure bezogen auf das Natriumpolyacrylat enthalten sind.

6. Abbindeverzögerer-Zusammensetzung gemäß einem der Ansprüche 1 bis 5, **dadurch gekennzeichnet, dass** die mittlere Partikelgröße der Zusammensetzung 200 µm beträgt.

7. Verfahren zur Einstellung der Abbindezeit von Gips-Zementmischungen, **dadurch gekennzeichnet, dass** man der Mischung eine Abbindeverzögerer-Zusammensetzung gemäß einem der Ansprüche 1 bis 5 in Mengen von 0,05 bis 0,8 Gew.-%, bevorzugt 0,1 bis 0,3 Gew.-%, bezogen auf die Menge der Gips-Zementmischung, zufügt.

8. Verfahren gemäß Anspruch 7, **dadurch gekennzeichnet, dass** man eine Gips-Zementmischung verwendet, die Gips und Zement im Gewichtsverhältnis von 4:1 bis 2,5:1 enthält.

9. Verfahren gemäß Anspruch 7 oder 8, **dadurch gekennzeichnet, dass** man die Abbindeverzögerer-Zusammensetzung trocken mit der Gips-Zementmischung vermischt.

10. Verfahren gemäß einem der Ansprüche 7 bis 9, **dadurch gekennzeichnet, dass** man für eine Abbindezeit von 1 bis 2 Stunden 0,05 bis 0,1 Gew.-% der Abbindeverzögerer-Zusammensetzung zufügt.

11. Verfahren gemäß einem der Ansprüche 7 bis 9, **dadurch gekennzeichnet, dass** man für eine Abbindezeit von 2 bis 5 Stunden 0,15 bis 0,2 Gew.-% der Abbindeverzögerer-Zusammensetzung zufügt.

12. Verfahren gemäß einem der Ansprüche 7 bis 9, **dadurch gekennzeichnet, dass** man für eine Abbindezeit von 5 bis 9 Stunden 0,25 bis 0,35 Gew.-% der Abbindeverzögerer-Zusammensetzung zufügt.
